# EUROPEAN PATENT APPLICATION

(11) **EP 1 486 757 A1**
(43) Date of publication of application: **15.12.2004**
(21) Application number: 03705566.2
(22) Date of filing: 13.01.2003
(51) Int. Cl.: G01B 7/00

(54) **METHOD FOR DISPLACING CONTROLLED OBJECTS**

(30) Priority: 20.02.2002 RU 2002104609
(71) Applicant: Rassomagin, Vasiliy Radinovich, Perm, 614025 (RU)
(72) Inventor: Rassomagin, Vasiliy Radinovich, Perm, 614025 (RU)
(74) Representative: HOFFMANN - EITLE
(86) International application number: PCT/RU2003/000005
(87) International publication number: WO 2003/048679

(57) **Abstract**

The inventive method consists in exciting resonance oscillations of electromagnetic field in an oscillating circuit which is provided with an inductance coil, measuring the capacitance of said oscillating circuit, the displacement of a controlled object being measured with the aid of the variation of the resonance oscillations of the oscillating circuit. An actuating object is arranged inside and/or outside the inductance coil and displaced with respect thereto, thereby modifying the capacitance of said coil by modifying the capacitive coupling between the different sections of the turns of the coil, the capacitance of the coil being the capacitance distributed along the winding thereof. Said invention extends the range of technical means for measuring the displacement of controlled objects.

## Description

### Field of the Invention

The invention relates to the field of automatics and computers, namely to automatic measuring the displacement of controlled objects and can be used for measuring of linear and angular displacement, deformation, and also can be applied in devices for measuring the acceleration, velocity, pressure, vibration, level of fluids and loose materials.

### Background of the Invention

It is known a method for measuring the displacement of moving objects, based on application of a linear differential transformer (see the book under edition of U. Tompkins and G. Webster. *Sensors and Data Input Devices Interfacing with IBM PC Computers -* M.: Mir, 1992, - pp. 379-381), the linear differential transformer (LDT) being an electromechanical device, generating output electric signal proportional to displacement of a separate core, connected to the moving object.

LDT comprises a primary and two secondary windings symmetrically arranged on a cylindrical frame. A magnetic core in form of a rod, freely moving inside the windings, provides coupling of these windings through magnetic flux. Displacement of the core from zero position causes increase of the mutual inductance (with the primary winding) for one secondary winding and reduction thereof for the other one. Excitation of the primary winding from external AC source induces voltage (EMF) in two secondary windings. The secondary windings are in series connected to each other, so voltages induced therein for the LDT output circuit are voltages of opposite polarity. This results in generation of a differential output signal with amplitude linearly depending on the core position.

Thus, LDT operates according to the mutual inductance change principle between magnetically coupled windings (inductance coils) whereas measuring the displacement in the proposed method is based on a self-capacitance change of the inductance coil which is a capacitance distributed along the coil windings. (see the book Kushnir F.V., Savenko V.G. *Electric and Radio Measurements*.- L.: Energia, 1975, - p. 211)

The closest art to the proposed method is a device comprising a displacement sensor (see specification to the USSR Author's Certificate No. 1173168, cl. G 01 B 7/08.). The sensor implementing the method for measuring the displacement includes a capacitor and an inductance coil forming an oscillating circuit and connected in a resonance measuring circuit, the sensor housing includes two dielectric plates connected by a common axis so they form different arms, and condenser armatures are fastened on internal faces of the long arms, the armatures being connected by springs with an inductance coil arranged on the axis, and the short arms are connected to the source of displacement. Measured displacement causes change of capacitance of the capacitor. Therefore change of capacitance leads to variation of the oscillating circuit resonance frequency.

The method comprises exciting resonant oscillations of electromagnetic field in the oscillating circuit including an inductance coil, changing capacitance of the oscillating circuit, and measuring the displacement of the controlled object due to variation of the frequency of the oscillating circuit. The present invention can be used for measuring of small displacements, e.g. for measuring the pressure, linear expansion of materials.

### Summary of the Invention

It is an object of the present invention to broaden the range of controlled objects displacement measuring means.

This object is achieved by the features specified in the claims of the present invention being common with the known art, such as the method for measuring the displacement of controlled objects, the method comprising exciting resonant oscillations of electromagnetic field in an oscillating circuit including an inductance coil, changing capacitance of the oscillating circuit, measuring the displacement of the controlled object by change of the frequency of the oscillating circuit resonant oscillations, and by the distinctive substantial features, such as an actuating object is arranged inside and/or outside the inductance coil, the actuating object being displaced in relation to the inductance coil causing change in the inductance coil self-capacitance, which is a capacitance distributed along the windings of the inductance coil, by change of capacitive coupling between separate parts of the inductance coil windings.

### Detailed Description of the Preferred Embodiments of the Invention

The present invention is particularly illustrated by the following inventive embodiments which illustrate the invention by the way of examples not restricting the scope thereof.

Measuring of the displacement by the proposed method includes the following operations: the actuating object is arranged inside and/or outside of the inductance coil, thus actuating object is completely insulated from the inductance coil. Resonant oscillations of electromagnetic field are induced in the oscillating circuit including the inductance coil, the oscillations parameters of the oscillating circuit (frequency of resonant oscillations) are measured, actuating object is displaced in relation to the inductance coil causing change of the inductance coil self-capacitance, which is a capacitance distributed along the inductance coil windings, by change of capacitive coupling between separate parts of the inductance coil windings, and variation of the frequency of resonant oscillations of the oscillating circuit. Displacement of the controlled object determines displacement of the actuating object in relation to the inductance coil, then a new value of the oscillating circuit resonant oscillations frequency is measured, displacement of the actuating object in relation to the inductance coil is determined by variation of resonant oscillations frequency of the oscillating circuit, and to this end the functional relation between the oscillating circuit resonant oscillations frequency and position of the actuating object in relation to the inductance coil is determined by initial graduation which results are stored in the computer memory. Thus, displacement of the controlled object which determines displacement of the actuating object in relation to the inductance coil is measured by variation the frequency of the oscillating circuit resonant oscillations.

The actuating object itself can be used as a controlled object which displacement in relation to the inductance coil is determined by variation the frequency of the oscillating circuit resonant oscillations, e.g. by the given method in devices for measuring acceleration, velocity wherein displacement of the actuating object in relation to the inductance coil is a measure of change of relevant values. The actuating object can be implemented from various materials, in different forms and sizes. It can have electrical properties of a conductor or a dielectric.

The inductance coil windings can be formed by winding turns of the inductance coil on a frame and/or in a zigzag fashion by a wire on the surface of the object.

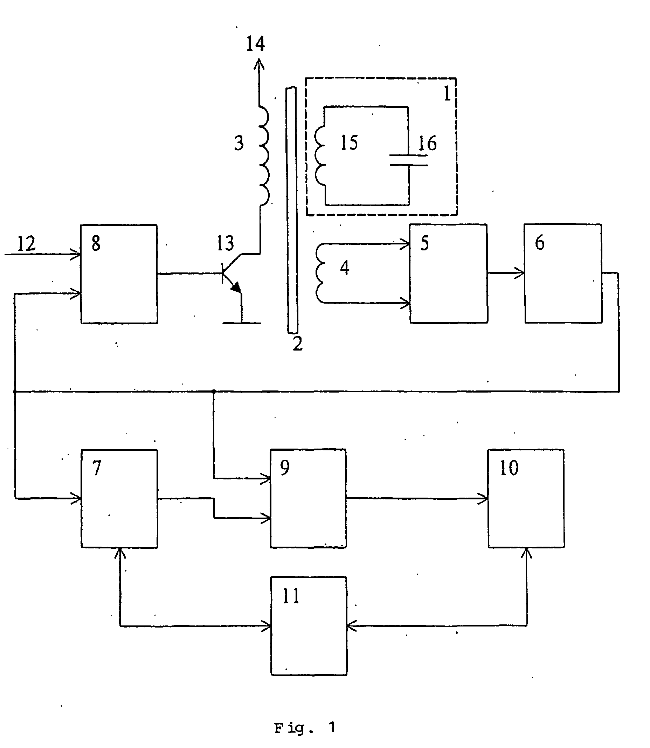

The device described in the Russian Federation patent No. 2149390, cl. G 01 N 27/00, 9/00, G 01 L 9/00, G 01 R 33/16. Bull. No.14, 2000 "Method for measuring of medium magnetic characteristics and physical values of density and pressure" can be used as the device embodying the technical realization of the proposed method. The drawing (figure) shows a block diagram of one of the possible embodiments of the proposed method.

The proposed method can be embodied with a device including an oscillating circuit 1, actuating object 2 arranged instead of the tested medium inside inductance coil 15, the inductance coil 15 being in a fixed position, the controlled object (not shown in the drawing) being immediately connected to actuating object 2, energy pumping winding 3, information reading winding 4 having terminals connected to inputs of measuring amplifier 5 having output connected to input of comparator 6 which output being connected to timing input of a frequency divider (not shown in the drawing) of time interval former 7, to a first input of OR circuit 8 and to timing input of trigger 9 which information input being connected to the output of a monostable multivibrator (not shown in the drawing) of time interval former 7, and direct output being connected to a starting input of a time interval measuring circuit 10, having a group of information inputs-outputs connected to computer 11 through an IEEE 488 CARD (not shown in the drawing) installed in computer 11, the card providing a general use channel (GUC), the time interval former 7 being connected to computer 1 through a serial information transfer channel RS-232C, a second input of OR circuit 8 being a start input 12 of continuous oscillations for oscillating circuit 1, and open collector output biased through a resistor (not shown in the drawing) to positive conductor of the voltage supply being connected to base of transistor 13 having emitter connected to "ground" terminal of the power supply circuit, and collector connected to a first terminal of energy pumping winding 3 which second terminal is connected to positive terminal 14 of the power supply circuit, and oscillating circuit 1 including inductance coil 15 and capacitor 16.

Inductance coil 15 can be formed as follows. Coil 15 is wound by enameled wire on a pipe frame made of a polymeric nonferromagnetic material in a form of a solenoid. Pumping coil 3 and information reading coil 4 are wound over inductance coil 15.

Measuring amplifier 5 is known from the book of Kofman R., Driskol F. *Operational Amplifiers and Linear Integrated Circuits. - M.:* Mir, 1979,- p. 148 and can be built on the base of a standard operational amplifiers of the type of KR544YD2. Comparator 6 can be executed on IC KR554SA3, and trigger 9, OR circuit 8 and transistor 13 accordingly are of the type of K555TM2, K555LE1 and KT3102.

A multichannel programmed time pulse generator (see specification to the invention of the USSR patent No. 1757085, cl. H 03 K 3/64. *Multichannel Programmed Time Pulse Generator*) can be used as time interval former 7. Thus all connections of generator 11 and timing inputs of timer 14 (see specification of the patent No. 1757085) are broken. One of three timers 14-1 operates in a frequency divider mode. Its synchronization input 5 is used in a device implementing the method as a timing input of time interval former 7, and an output included in the group of outputs 33-1, is connected with the timing input of one of timers 14-2 operating in a monostable multivibrator mode, the output of the monostable multivibrator included in the group of outputs 33-2 is used as an output of time interval former 7 in the device implementing the method.

A detailed description of timers 14-1, 14-2, ..., 14-N operation and functional parameters of the frequency divider mode and monostable multivibrator mode can be found in the book under edition of Shahnov V.A. *Hand-book*. *Microprocessors and Microprocessor Sets of Integrated Microcircuits*. *-* v. 1. - M.: Radio i Sviaz, 1988, - pp. 76 - 82.

Device 12-24 described in the book under edition of Ku2netsov V.A. *Hand-book*. *Measurings in Electronics*.*-* M.: Energoatomizdat, 1987, p. 351 is chosen as a time intervals measuring circuit.

An IBM PC computer can be used as computer 11.

Operation of the device will be described on an example of arrangement of actuating object 2 inside inductance coil 15.

The method is embodied in the following manner.

After switching on the power a program of computer 11 establishes, according to the specification of the invention of the USSR patent No. 1757085, operation modes of timers 14.1, 14-2 (not shown in the drawing) of time interval former 7. Channel 0 of timer 14-1 (not shown in the drawing) operates in mode 2 that is in a frequency divider mode. Channel 0 of timer 14-2 (not shown in the drawing) operates In mode 1 that is in a monostable multivibrator mode. Thus output voltages of these channels are established on logic 1 level. Thus a logic 1 level is established in information input of trigger 9. A logic 0 level is established on sample inputs of timers 14-1 and 14-2 (not shown in the drawing) forbidding operation of the timers. Time interval measuring circuit 10, through the general use channel of the computer, also operates in a mode of pulse length measuring.

Then a single pulse is sent to start input 12 and further to the second input of OR circuit 8, e.g. from a parallel channel (not shown in the drawing) of computer 11, or with use of a button and time delay. A positive pulse is fed to the base of transistor 13 which opens transistor 13, causing the current to flow through energy pumping winding 3, inducing EMF - electromotive force - in oscillating circuit 1 which generates electromagnetic oscillations. Displacement of actuating object 2 inside inductance coil 15 changes self-capacitance of inductance coil 15 which is a capacitance distributed along the windings of coil 15, by change of capacitive coupling between separate parts of inductance coil 15 turns, and frequency of oscillating circuit 1 resonant oscillations also changes which is measured by reading information from information reading coil 4. Terminals of reading coil 4 are connected to direct inputs of measuring amplifier 5 which amplifies the signal. Then a signal from measuring amplifier 5 output comes to the direct input of comparator 6 which inverse input is biased with a reference voltage. Positive signals of rectangular form from output of comparator 6 come to the first input of OR circuit 8 (the second input of OR circuit 8 at this moment has a level of logic zero), timing input of time interval former 7 and timing input of trigger 9. Rectangular pulses from the output of OR circuit 8 come to the base of transistor 13 opening it and allowing current to flow through energy pumping coil 3, change of the current in oscillating circuit 1 induces EMF generating currents in oscillating circuit 1, these currents have a concordant direction with the current in coil 15 in each half-cycle of oscillations of oscillating circuit 1. Thus oscillating circuit 1, in the positive half-cycle of oscillations, pumps energy during increase of the current in energy pumping coil 3, and in the negative half-cycle of oscillations energy pumping occurs during reduction of the current in energy pumping coil 3, since energy transfer occurs at the moment of change of the current in energy pumping coil 3. Thus continuous resonant oscillations are generated in oscillating circuit 1 with pumping energy at particular moments of time, amplitude of oscillations is incremented at these moments, these oscillations are transformed in digital form and frequency of oscillating circuit 1 is determined.

The program of computer 11 further send logic I levels from starting unit (not shown in the drawing) to enabling inputs of timers 14-1, 14-2 (not shown in the drawing) and enables operation thereof. Thus one of the timers of group 14-1 (not shown in the drawing) operating in a frequency divider mode begins to divide by *n* times the input frequency fed from the output of comparator 6 to timing input of time interval former 7, the n value is set by the program of computer 11 in the counter of channel 0 of the timer (not shown in the drawing). On the output of this timer (not shown in the drawing) upon termination of the count, each time a negative pulse is generated which duration is equal to the frequency period of the input signal fed from the output of comparator 6. From the output of the frequency divider (not shown in the drawing) the signal comes to synchronization input of a timer of group of timers 14-2 (not shown in the drawing) of time interval former 7 operating in a monostable multivibrator mode, and the monostable multivibrator (not shown in the drawing) starts operation on the negative front of the input pulse, the output of the monostable multivibrator is established in a logic zero level. This logic zero comes to the information input of trigger 9, establishing it in a zero condition by the positive front of the pulse sent from the output of comparator 6, and forms a beginning of the time interval, and measure unit 10 starts to measure this time interval. The monostable multivibrator (not shown in the drawing) of time interval former 7 decrements the number stored in its counter (counts the number of negative pulses sent to its timing input from the output of the frequency divider (not shown in the drawing)) and after receipt of a predetermined number of pulses establishes an output level of logic 1. Thus on the first positive front of the pulse fed from the output of comparator 6 to timing input of trigger 9, trigger 9 is established in a logic 1 condition and forms closing of time interval measuring for time interval measure unit 10. Trigger 9 is necessary to prevent influence of switching time delays on fronts to operation of counters (not shown in the drawing) of time interval former 7. The time interval formed by trigger 9 and time interval measure unit 10 is read out through the general use channel by programs of computer 11, and oscillation frequency of oscillating circuit 1 is determined by measuring time interval accommodating a predetermined number of oscillations periods of oscillating circuit 1.

The oscillation frequency of oscillating circuit I is measured before and after displacement of the controlled object. Then with help of the program of computer 11 displacement of the controlled object is calculated which determines displacement of the actuating object in relation to the inductance coil 15, and to this end a functional relation between the frequency of oscillating circuit 1 resonant oscillations and position of actuating object 2 in relation to the inductance coil 15 is determined by initial graduation, the results of which are stored in the memory of computer 11.

Actuating object 2 comprises a diamagnetic substance and can be formed as a thin metal cylinder with a slit on the generatrix on a surface of round polymer core.

Actuating object 2 is formed to provide a minimal distance between inductance coil 15 and actuating object 2.

In case of translational motion inside inductance coil 15 of the metal cylinder with a slit on the generatrix, self-capacitance of inductance coil 15, which is a capacitance distributed along the windings of inductance coil 15, will increment, since the capacitive coupling increases between separate parts of turns of inductance coil 15 which are covered inside inductance coils 15 by the metal cylinder with a slit on the generatrix.

Since the actuating object 2 is made of a diamagnetic substance, influence of actuating object 2 on the frequency of oscillating circuit 1 resonant oscillations related to the change of inductance of coil 15 due to displacement of actuating object 2 in relation to inductance coil 15 practically will be absent.

Thus, variation of the oscillation frequency of oscillating circuit 1 due to displacement of actuating object 2 in relation to inductance coil 15 will be determined by change of the self-capacitance of inductance coil 15 which level is determined by position of actuating object 2 in relation to inductance coil 15.

Because the displacement of the controlled object determines displacement of actuating object 2 in relation to inductance coil 15, displacement of the controlled object will be measured by variation of the frequency of oscillating circuit I resonant oscillations.

According to the block diagram the multivibrator of the device for measuring the displacement can be built as the oscillating circuit, and on the minimal distance therefrom.

The above described particular examples shows industrial applicability of the proposed technical solution.

### Industrial Applicability

The method will find wide application in technologies and devices for measuring the linear and angular displacements, deformation, and also in devices for measuring acceleration, velocity, pressure, vibration, level of fluids and loose materials.

## Claims

1. Method for measuring the displacement of controlled objects, comprising exciting resonant oscillations of electromagnetic field in an oscillating circuit including an inductance coil, changing capacitance of the oscillating circuit, measuring the displacement of the controlled object by change of the frequency of the oscillating circuit resonant oscillations, **characterized in that** an actuating object is arranged inside and/or outside of the inductance coil, said actuating object being displaced in relation to the inductance coil causing change in the inductance coil self-capacitance, which is a capacitance distributed along the windings of the inductance coil, by change of capacitive coupling between separate parts of the inductance coil windings.
